# EUROPÄISCHE PATENTANMELDUNG

(11) **EP 3 756 793 A1**
(43) Veröffentlichungstag der Anmeldung: **30.12.2020**
(21) Anmeldenummer: 19183271.6
(22) Anmeldetag: 28.06.2019
(51) Int. Cl.: B22F 3/105, B29C 64/153, B33Y 10/00, B33Y 30/00, B33Y 40/00

(54) **VERFAHREN UND ANORDNUNG ZUM SEPARIEREN ÜBERSCHÜSSIGEN WERKSTOFFS VON EINEM ADDITIV HERGESTELLTEN BAUTEIL**

(71) Anmelder: Siemens Aktiengesellschaft, 80333 München (DE)
(72) Erfinder: Hartmann, Dirk, 85617 Aßling (DE); Paffrath, Meinhard, 85622 Feldkirchen (DE); Kiener, Christoph, 81369 München (DE)

(57) **Zusammenfassung**

Zum Separieren überschüssigen Werkstoffs (WS) wird das Bauteil (BT) durch eine anhand von Bewegungsdaten (BD) steuerbare Bewegungsvorrichtung (BV) bewegt und ein Füllgrad (FG) des Bauteils (BT) mit Werkstoff (WS) gemessen. Erfindungsgemäß wird für unterschiedliche Anfangsfüllgrade (AFG1,...,AFGN) des Bauteils (BT) mit Werkstoff (WS) jeweils ein Ausschüttvorgang von Werkstoff (WS) aus dem Bauteil (BT) simuliert, wobei jeweils Bewegungsdaten (BD), die eine simulierte Bewegung des Bauteils (BT) spezifizieren, sowie ein aus der simulierten Bewegung resultierender, simulierter Füllgradverlauf (SFG) dem jeweiligen Anfangsfüllgrad (AFG1,...,AFGN) zugeordnet werden. Weiterhin wird abhängig vom gemessenen Füllgrad (FG) ein entsprechender Anfangsfüllgrad (SAFG) selektiert, und die Bewegungsvorrichtung (BV) wird anhand von Bewegungsdaten angesteuert, die dem selektierten Anfangsfüllgrad (SAFG) zugeordnet sind. Der Füllgrad (FG) wird dann erneut gemessen und mit einem dem selektierten Anfangsfüllgrad (SAFG) zugeordneten simulierten Füllgradverlauf (SFG) verglichen. Abhängig vom Vergleichsergebnis werden dann die Verfahrensschritte des Selektierens eines entsprechenden Anfangsfüllgrades (SAFG) und des Ansteuerns der Bewegungsvorrichtung (BV) erneut ausgeführt.

## Beschreibung

In zeitgemäßen Produktionsprozessen gewinnt die additive Fertigung zunehmend an Bedeutung. Sie erlaubt es, Produkte mit nahezu beliebig komplexen Umrissen und Topologien mit verhältnismäßig geringem Aufwand zu produzieren. Verglichen mit klassischen Fertigungsverfahren sind bei der additiven Fertigung nur wenige konstruktive Nebenbedingungen einzuhalten.

Eine bekannte additive Fertigungstechnologie ist das sogenannte Pulverbettverfahren, das insbesondere bei der Herstellung von metallischen Bauteilen Anwendung findet. Hierbei wird der Werkstoff für das herzustellende Bauteil in Form eines Pulverbetts, Fluidbetts bzw. Werkstoffbetts schichtweise bereitgestellt. Zur Herstellung des Bauteils werden dann die einzelnen Partikel des Werkstoffs Schicht für Schicht miteinander verbunden. Der Werkstoff kann hierbei ein Metall, ein Polymerpulver, ein anorganisches Material oder ein anderes pulverförmiges oder flüssiges Material sein. Die Verbindung der Werkstoffpartikel kann durch physikalische oder chemische Prozesse, durch Sintern, Verkleben, Aufschmelzen, Erstarren oder andere Verbindungsverfahren bewirkt werden. Bekannte Verfahren sind Laserschmelzen und Lasersintern sowie die Anwendung von UV-Strahlung zur Auhärtung flüssiger Werkstoffe.

Der nicht verbundene, d.h. überschüssige Werkstoff dient während des Fertigungsprozesses als eine passive Stützstruktur, so dass beispielsweise überhängende Geometrien realisiert werden können. Ähnliches gilt auch für Fluide oder fluidisierbare Materialien, wie z.B. durch UV-Strahlen aushärtbare Monomere. Nach Beendigung des Fertigungsprozesses füllt der nicht verbundene Werkstoff häufig das Bauteil komplett oder zumindest teilweise aus und muss nach Entnahme des Bauteils aus dem Werkstoffbett aus den Hohlräumen des finalen Bauteils entfernt werden.

Bisher erfolgt die Entfernung des überschüssigen Werkstoffs manuell oder durch maschinelles Rotieren oder Schütteln des Bauteils. Eine solche Vorgehensweise kann jedoch - insbesondere, wenn das Bauteil Hohlräume mit komplexer Geometrie aufweist - sehr langwierig sein.

Es ist Aufgabe der vorliegenden Erfindung, ein Verfahren und eine Anordnung zu schaffen, die eine effiziente Separierung überschüssigen Werkstoffs von einem additiv hergestellten Bauteil erlauben.

Gelöst wird diese Aufgabe durch ein Verfahren mit den Merkmalen des Patentanspruchs 1 sowie durch eine Anordnung mit den Merkmalen des Patentanspruchs 11.

Zum Separieren überschüssigen Werkstoffs von einem additiv hergestellten Bauteil, wird das Bauteil durch eine anhand von Bewegungsdaten steuerbare Bewegungsvorrichtung bewegt und ein Füllgrad des Bauteils mit Werkstoff gemessen. Erfindungsgemäß wird für unterschiedliche Anfangsfüllgrade des Bauteils mit Werkstoff jeweils ein Ausschüttvorgang von Werkstoff aus dem Bauteil simuliert, wobei jeweils Bewegungsdaten, die eine simulierte Bewegung des Bauteils spezifizieren, sowie ein aus der simulierten Bewegung resultierender, simulierter Füllgradverlauf dem jeweiligen Anfangsfüllgrad zugeordnet werden. Weiterhin wird abhängig vom gemessenen Füllgrad ein entsprechender, insbesondere möglichst wenig abweichender Anfangsfüllgrad selektiert, und die Bewegungsvorrichtung wird anhand von Bewegungsdaten angesteuert, die dem selektierten Anfangsfüllgrad zugeordnet sind. Der Füllgrad wird dann erneut gemessen und mit einem dem selektierten Anfangsfüllgrad zugeordneten simulierten Füllgradverlauf verglichen. Abhängig vom Vergleichsergebnis werden die Verfahrensschritte des Selektierens eines entsprechenden Anfangsfüllgrades und des Ansteuerns der Bewegungsvorrichtung erneut ausgeführt.

Durch die Simulation der Ausschüttvorgänge und die darauf basierende Bewegung des Bauteils kann der überschüssige Werkstoff in der Regel sehr effektiv vom Bauteil separiert werden. Darüber hinaus erweist sich das erfindungsgemäße Verfahren in vielen Fällen als sehr robust gegenüber Simulationsfehlern, da bei Abweichungen zwischen realer und simulierter Entleerung auf einfache Weise auf besser angepasste Simulationsergebnisse zurückgegriffen werden kann.

Vorteilhafte Ausführungsformen und Weiterbildungen der Erfindung sind in den abhängigen Ansprüchen angegeben.

Nach einer vorteilhaften Ausführungsform der Erfindung kann das Bauteil durch die Bewegungsvorrichtung in unterschiedliche räumliche Ausrichtungen rotiert und/oder in mechanische Schwingungen versetzt werden. Eine Amplitude, Frequenz oder Schwingungsrichtung der Schwingung kann dabei vorzugsweise simulativ optimiert werden. Mechanische Schwingungen des Bauteils während des Ausschüttvorgangs begünstigen einen gleichverteilten und damit häufig besser simulierbaren Zustand des überschüssigen Werkstoffs im Bauteil. Zudem kann der Werkstoff durch die Schwingungen gewissermaßen aus dem Bauteil herausgeschüttelt werden.

Weiterhin kann zum Messen des Füllgrads aus dem Bauteil ausgeschütteter Werkstoff gewogen werden. Anhand des Gewichts des ausgeschütteten Werkstoffs kann auf einfache Weise auf eine Menge des im Bauteil verbliebenen Werkstoffs und damit auf den Füllgrad geschlossen werden.

Nach einer weiteren vorteilhaften Ausführungsform der Erfindung kann das Vergleichsergebnis eine quantifizierte Abweichung zwischen dem erneut gemessenen Füllgrad und dem dem selektierten Anfangsfüllgrad zugeordneten simulierten Füllgradverlauf umfassen. Es kann dann geprüft werden, ob die Abweichung einen vorgegebenen Toleranzwert überschreitet. Im Falle einer Überschreitung kann ein neuer Anfangsfüllgrad selektiert werden, der weniger vom erneut gemessen Füllgrad abweicht als der bisher selektierte Anfangsfüllgrad. Andernfalls kann der bisher selektierte Anfangsfüllgrad beibehalten werden. Auf diese Weise kann bei einer zu großen Abweichung zwischen realem und simuliertem Ausschüttvorgang auf weniger abweichende und damit in der aktuellen Situation genauere Simulationsergebnisse zurückgegriffen werden.

Gemäß einer besonderes vorteilhaften Ausführungsform der Erfindung können räumlich aufgelöste Strukturdaten des Bauteils empfangen werden. Anhand der Strukturdaten kann ein Hohlraum des Bauteils ermittelt und in erste räumliche Bereiche eingeteilt werden. Für einen jeweiligen ersten räumlichen Bereich kann dann eine Weglänge eines im Hohlraum verlaufenden Wegs zu einer Öffnung des Hohlraums und/oder eine erste Schüttrichtung, in der sich diese Weglänge verkürzt, ermittelt und dem jeweiligen ersten räumlichen Bereich zugeordnet werden. Die erste Schüttrichtung gibt für einen jeweiligen ersten räumlichen Bereich eine Richtung an, in der der dort befindliche Werkstoff zu befördern oder zu schütten ist, um sich der Öffnung zu nähern. Vorzugsweise kann als erste Schüttrichtung die Richtung eines negativen Gradienten der ortsabhängigen Weglänge ermittelt werden. Der negative Gradient gibt diejenige Richtung an, in der sich die Weglänge maximal verkürzt.

Darüber hinaus kann der Hohlraum in zweite räumliche Bereiche mit gröberer räumlicher Auflösung als die ersten räumlichen Bereiche eingeteilt werden. Für einen jeweiligen zweiten räumlichen Bereich kann dann eine zweite Schüttrichtung aus ersten Schüttrichtungen von mit dem jeweiligen zweiten räumlichen Bereich überlappenden ersten räumlichen Bereichen abgeleitet werden. Insbesondere können die zweiten Schüttrichtungen durch eine gegebenenfalls gewichtete Mittelung über die ersten Schüttrichtungen berechnet werden. Auf diese Weise können Schüttrichtungen ermittelt werden, die für eine größere Menge Werkstoff und/oder über ein längeres Zeitintervall hinweg eine effiziente Beförderung von Werkstoff zur Öffnung bewirken können. In vielen Fällen kann hierdurch die Anzahl von Entleerungsschritten signifikant reduziert werden.

Zur Einteilung in räumliche Bereiche, insbesondere in erste oder zweite räumliche Bereiche, kann ein virtuelles räumliches Gitter über das Bauteil oder den Hohlraum gelegt werden. Die räumlichen Bereiche werden dann durch die im Hohlraum des Bauteils befindlichen oder damit überlappenden Gitterzellen dieses virtuellen Gittes gebildet. Insbesondere kann eine Hierarchie von virtuellen Gittern unterschiedlicher Auflösung über das Bauteil oder Hohlraum gelegt werden, um eine Hierarchie von Einteilungen in räumliche Bereiche zu erzeugen.

Vorteilhafterweise kann eine kürzeste Weglänge eines jeweiligen räumlichen Bereichs, insbesondere eines jeweiligen ersten oder zweiten räumlichen Bereichs, zur Öffnung mittels eines Fast-Marching-Verfahrens ermittelt werden. Zur Ausführung von Fast-Marching-Verfahren stehen eine Vielzahl von effizienten Standardroutinen zur Verfügung.

Gemäß einer weiteren vorteilhaften Ausführungsform der Erfindung können im Rahmen der Simulationen jeweils
- der Hohlraum des Bauteils simulativ mit virtuellem Werkstoff bis zum jeweiligen Anfangsfüllgrad gefüllt werden,
- ein räumlicher Bereich selektiert werden, der eine kürzere Weglänge zur Öffnung aufweist und/oder mit mehr virtuellem Werkstoff gefüllt ist als andere räumliche Bereiche,
- eine dem selektierten räumlichen Bereich zugeordnete Schüttrichtung, insbesondere eine erste oder zweite Schüttrichtung, ermittelt werden, und
- Bewegungsdaten ermittelt werden, die eine Ausrichtung des Bauteils gemäß der ermittelten Schüttrichtung spezifizieren. Die Ausrichtung kann vorzugsweise derart erfolgen, dass die ermittelte Schüttrichtung in Richtung der Schwerkraft nach unten weist, um so eine schwerkraftgetriebene und ggf. durch mechanische Schwingungen unterstürzte Entleerung zu realisieren.

Insbesondere kann im Rahmen der Simulationen jeweils eine bewegungsbedingte Verteilung von virtuellem Werkstoff im Bauteil simuliert werden. Dies erlaubt in vielen Fällen eine genauere Simulation des Ausschüttvorgangs.

Ein Ausführungsbeispiel der Erfindung wird nachfolgend anhand der Zeichnung näher erläutert. Dabei veranschaulichen jeweils in schematischer Darstellung:
- Figur 1: eine erfindungsgemäße Anordnung,
- Figur 2: eine Simulation eines Ausschüttvorgangs,
- Figur 3: eine Einteilung eines Bauteils in Bereiche mit unterschiedlicher räumlicher Auflösung und
- Figur 4: ein Ablaufdiagramm eines erfindungsgemäßen Verfahrens

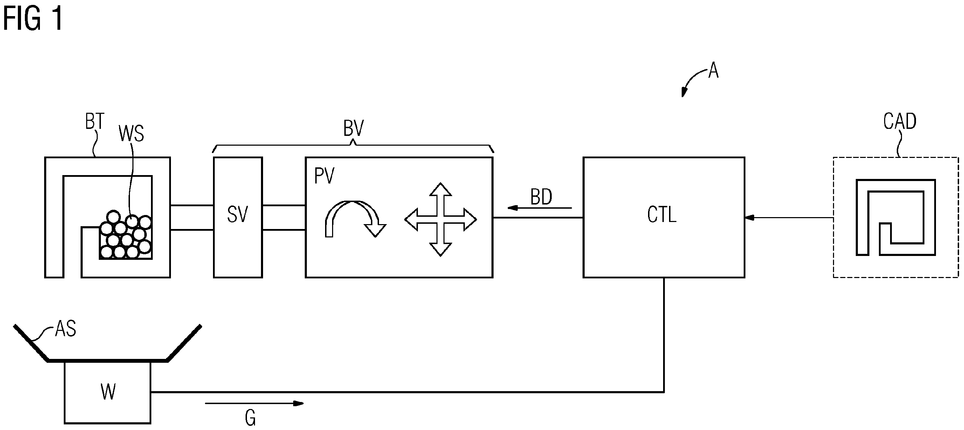

Figur 1 zeigt in schematischer Darstellung eine erfindungsgemäße Anordnung A zum Separieren überschüssigen Werkstoffs WS von einem additiv, d.h. mittels eines additiven Fertigungsverfahrens hergestellten Bauteil BT. Das Bauteil BT ist vorzugsweise durch einen 3D-Drucker im Pulverbettverfahren hergestellt, bei dem, wie einleitend dargestellt, einzelne Partikel eines pulverförmigen oder fluiden Werkstoffs Schicht für Schicht miteinander verbunden werden. Der bei der additiven Fertigung nicht verbundene und damit überschüssige Werkstoff WS ist entsprechend zu entfernen. Figur 1 zeigt das Bauteil BT nach Beendigung des schichtweisen Fertigungsprozesses, aber noch vor Entfernung des überschüssigen, nicht verbundenen Werkstoffs WS.

Die Anordnung A weist eine Schwingungsvorrichtung SV, eine Positioniervorrichtung PV, eine Steuerung CTL sowie eine Waage W mit Auffangschale AS auf.

Das Bauteil BT ist mit der Schwingungsvorrichtung SV mechanisch gekoppelt, die wiederum mit der Positioniervorrichtung PV mechanisch gekoppelt ist. Die Positioniervorrichtung PV, die vorzugsweise als Roboterarm ausgebildet ist, dient zum Positionieren und räumlichen Ausrichten des Bauteils BT, während die Schwingungsvorrichtung SV dazu eingerichtet ist, das Bauteil BT in mechanische Schwingungen zu versetzen. Eine Amplitude, Frequenz und/oder Schwingungsrichtung der mechanischen Schwingungen ist vorzugsweise variierbar. Die Positioniervorrichtung PV kann das Bauteil BT gemeinsam mit der Schwingungsvorrichtung SV um eine oder mehrere Rotationsachsen rotieren und translatorisch verfahren. Vorzugsweise kann das Bauteil BT durch eine als Roboterarm ausgebildete Positioniervorrichtung PV einer 3D-Fertigungsumgebung, wie beispielsweise einem 3D-Drucker entnommen und an der Schwingungsvorrichtung SV fixiert werden. Die Positioniervorrichtung PV und die Schwingungsvorrichtung SV sind Teil einer Bewegungsvorrichtung BV zum Bewegen des Bauteils BT.

Unter dem Bauteil BT ist die Waage W mit Auffangsschale AS angeordnet. Die Auffangschale AS dient zum Auffangen von aus dem Bauteil BT ausgeschüttetem Werkstoff WS, der von der Waage W gewogen wird. Anstelle oder zusätzlich zur Waage W kann auch ein anderer Mengensensor zur Erfassung einer Menge ausgeschütteten Werkstoffs WS vorgesehen sein.

Die Waage W, die Positioniervorrichtung PV, die Schwingungsvorrichtung SV bzw. die Bewegungsvorrichtung BV sind mit der Steuerung CTL gekoppelt. Die Steuerung CTL dient zum Steuern der Bewegungsvorrichtung BV, d.h. zum Steuern der Positionierung und Ausrichtung des Bauteils BT durch die Positioniervorrichtung PV sowie zum Steuern der durch die Schwingungsvorrichtung SV zu bewirkenden Schwingungen.

Die Bewegungsvorrichtung BV wird abhängig von mehreren Simulationen von Ausschüttvorgängen des Werkstoff WS aus dem Bauteil BT gesteuert. Diese Simulationen werden anhand eines volumetrischen Modells CAD des Bauteils BT durch die Steuerung CTL ausgeführt. Das volumetrische Modell CAD wird dabei durch räumlich aufgelöste Strukturdaten des Bauteils BT dargestellt, die zur Steuerung CTL übermittelt werden. Anhand dieser Simulationen ermittelt die Steuerung CTL geeignete Bewegungsdaten BD zum Ansteuern der Positioniervorrichtung PV und der Schwingungsvorrichtung SV bzw. der Bewegungsvorrichtung BV. Durch die Bewegungsdaten BD werden vom Bauteil BT einzunehmende Positionen und Ausrichtungen sowie Frequenz, Amplitude und/oder Schwingungsrichtungen von Schwingungen quantifiziert. Die Ausrichtungen des Bauteils können vorzugsweise durch Winkelangaben, beispielsweise in Form von Raumwinkeln oder Eulerwinkeln quantifiziert werden.

Die Bewegungsvorrichtung BV empfängt die Bewegungsdaten BD von der Steuerung CTL und wird durch die Bewegungsdaten BD gesteuert. Auf diese Weise wird die Positioniervorrichtung PV dazu veranlasst, das Bauteil BT so zu positionieren und auszurichten, dass der überschüssige Werkstoff WS möglichst schnell und effektiv ausgeschüttet wird. Darüber hinaus wird die Schwingungsvorrichtung SV dazu veranlasst das Bauteil BT derart in mechanische Schwingungen zu versetzen, dass der Ausschüttvorgang nach Möglichkeit beschleunigt wird. Der Werkstoff WS wird hierbei gewissermaßen herausgeschüttelt.

Der ausgeschüttete Werkstoff WS wird durch die Waage W fortlaufend gewogen, wobei ein Gewicht G des ausgeschütteten Werkstoffs WS zur Steuerung CTL übermittelt wird. Durch die Steuerung CTL wird aus dem übermittelten Gewicht G ein Füllgrad des Bauteils BT mit überschüssigem Werkstoff WS ermittelt. Als Füllgrad kann vorzugsweise eine im Bauteil BT aktuell befindliche Menge überschüssigen Werkstoffs WS, d.h. eine aktuelle Restfüllmenge, im Verhältnis zur Gesamtmenge überschüssigen Werkstoffs ermittelt werden. Die Restfüllmenge kann hierbei auf einfache Weise als Differenz zwischen der Gesamtmenge überschüssigen Werkstoffs und der durch das Gewicht G quantifizierten Menge ausgeschütteten Werkstoffs ermittelt werden. Die Gesamtmenge überschüssigen Werkstoffs kann vorzugsweise aus dem volumetrischen Modell CAD des Bauteils BT abgeleitet werden.

Abhängig von den ermittelten Füllgraden werden die Simulationen ausgeführt und die Bewegungsvorrichtung BV durch die Steuerung CTL angesteuert.

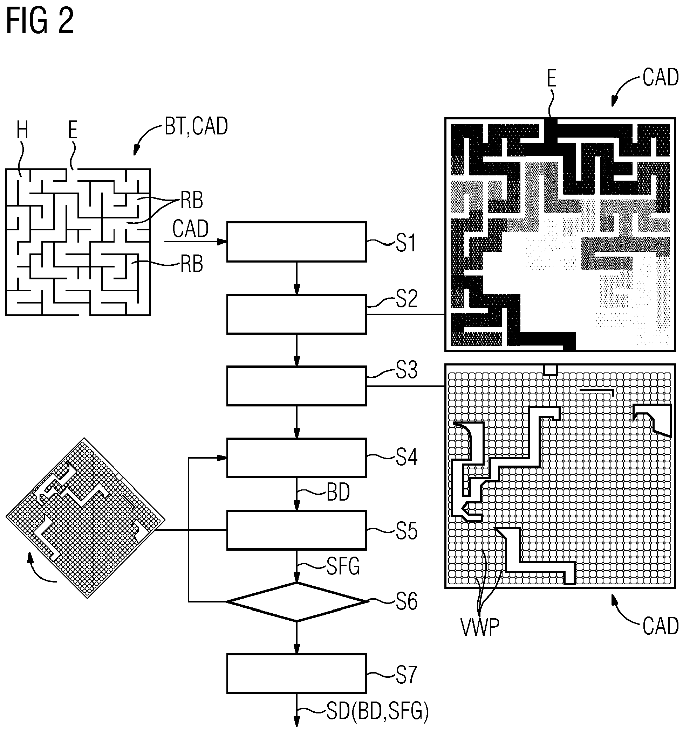

Figur 2 veranschaulicht eine Simulation eines Ausschüttvorgangs von überschüssigem Werkstoff WS aus dem Bauteil BT. Insofern in Figur 2 die gleichen oder korrespondierende Bezugszeichen verwendet werden wie in Figur 1, werden hierdurch die gleichen oder korrespondierende Entitäten bezeichnet, die vorzugsweise wie oben beschrieben implementiert oder realisiert sind.

Zur Simulation des Ausschüttvorgangs werden Verfahrensschritte S1 bis S7 vorzugsweise durch die Steuerung CTL ausgeführt.

In Verfahrensschritt S1 wird ein volumetrisches Modell CAD des Bauteils BT in Form von räumlich aufgelösten Strukturdaten des Bauteils BT von der Steuerung CTL eingelesen. Das volumetrische Modell CAD kann insbesondere als sogenanntes CAD-Modell (CAD: Computer Aided Design) vorliegen. Anhand des volumetrischen Modells CAD wird ein Hohlraum H des Bauteils BT ermittelt, der nach der additiven Fertigung des Bauteils BT mit überschüssigem Werkstoff WS gefüllt ist und über eine Öffnung E des Bauteils BT zu entleeren ist.

Der Hohlraum H wird zur Simulation des Ausschüttvorgangs in eine Vielzahl von räumlichen Bereichen RB eingeteilt. Zu diesem Zweck kann vorzugsweise ein virtuelles räumliches Gitter über das Bauteil BT oder über den Hohlraum H gelegt werden. Die räumlichen Bereiche RB werden dann durch die im Hohlraum H befindlichen oder mit diesem überlappenden Gitterzellen dargestellt. Aus Übersichtlichkeitsgründen sind in Figur 2 nur wenige dieser räumlichen Bereiche RB explizit dargestellt.

Im Verfahrensschritt S2 werden anhand des volumetrischen Modells CAD für einen jeweiligen räumlichen Bereich RB jeweils eine Weglänge eines im Hohlraum H verlaufenden Wegs zur Öffnung E ermittelt. Die jeweiligen Weglängen sind im rechten oberen Teil von Figur 2 schattiert dargestellt, wobei dunklere Bereiche näher an der Öffnung E angeordnet sind als hellere Bereiche. Vorteilhafterweise können die Weglängen mit Hilfe eines sogenanntes Fast-Marching-Verfahrens ermittelt werden, durch das für jeden räumlichen Bereich RB jeweils ein kürzester Weg von diesem räumlichen Bereich zur Öffnung E ermittelt wird. Gemäß des Fast-Marching-Verfahrens können die kürzesten Wege und deren Weglängen ermittelt werden, indem eine virtuelle, von der Öffnung E ausgehende Wellenausbreitung betrachtet und für jeden der räumlichen Bereiche RB eine Ankunftszeit ermittelt wird. Die Ankunftszeiten entsprechen dann den zu ermittelnden Weglängen.

Weiterhin wird für einen jeweiligen Bereich RB eine jeweilige lokale Schüttrichtung ermittelt, in der sich die lokale Weglänge am meisten verkürzt. Diese Schüttrichtung wird vorzugsweise als negativer Gradient eines Weglängenfeldes ermittelt. Die jeweils ermittelte Weglänge und Schüttrichtung wird dem jeweiligen räumlichen Bereich zugeordnet.

Im Verfahrensschritt S3 wird der Hohlraum H anhand des volumetrischen Modells CAD mit virtuellen Werkstoffpartikeln VWP bis zu einem vorgegebenen Anfangsfüllgrad virtuell gefüllt. Hierbei kann ein virtueller Werkstoffpartikel VWP in einer Simulation stellvertretend für eine Vielzahl realer Werkstoffpartikel stehen. Bei Verwendung anderer Simulationen kann eine Füllung mit virtuellem Werkstoff entsprechend anders realisiert werden.

Im Verfahrensschritt S4 wird eine für den Entleerungsprozess vorteilhafte Ausrichtung sowie Schwingung des Bauteils BT ermittelt. Die Wahl einer aktuellen Ausrichtung bestimmt den Entleerungsprozess, bei dem die Schwerkraft eine treibende Kraft ist und durch das Schütteln des Bauteils BT unterstützt wird. Die Wahl der Ausrichtung basiert auf einer Analyse des aktuellen Füllgrads des Bauteils BT sowie der ermittelten Weglängen und Schüttrichtungen.

Um eine vorteilhafte Ausrichtung zu ermitteln, werden die räumlichen Bereiche RB nach einem aktuell mit vielen, insbesondere möglichst vielen virtuellen Werkstoffpartikeln VWP gefüllten räumlichen Bereich durchsucht, dem eine kurze, insbesondere möglichst kurze Weglänge zur Öffnung E zugeordnet ist. Gegebenenfalls kann für einen jeweiligen räumlichen Bereich ein Schüttparameter ermittelt werden, in dem eine aktuell darin enthaltene Menge an virtuellen Werkstoffpartikeln VWP mit der zugeordneten Weglänge, z.B. in Form einer gewichteten Summe verrechnet wird. Vorzugsweise wird ein solcher Schüttparameter durch eine kürzere Weglänge sowie durch eine größere Anzahl von aktuell enthaltenen virtuellen Werkstoffpartikeln VWP erhöht und andernfalls verringert. In diesem Fall kann aus den räumlichen Bereichen RB ein räumlicher Bereich selektiert werden, der den höchsten Schüttparameter aufweist.

Anschließend wird eine dem gefundenen oder selektierten räumlichen Bereich zugeordnete Schüttrichtung ermittelt. Anhand der ermittelten Schüttrichtung werden Bewegungsdaten BD berechnet, durch die das Bauteil BT so ausgerichtet würde, dass die ermittelte Schüttrichtung in Schwerkraftrichtung nach unten weist.

Darüber hinaus werden weitere Bewegungsdaten BD ermittelt, durch die das Bauteil BT in den Ausschüttvorgang beschleunigende Schwingungen versetzt würde. Die weiteren Bewegungsdaten BD können insbesondere Amplitude, Frequenz sowie Schwingungsrichtung dieser Schwingungen spezifizieren. Durch die ermittelten Bewegungsdaten BD wird ein spezifischer Bewegungsschritt für das Bauteil BT quantifiziert.

Im Verfahrensschritt S5 wird der durch diesen Bewegungsschritt spezifisch induzierte Ausschüttvorgang von virtuellen Werkstoffpartikeln VWP aus der Öffnung E des Bauteils BT physikalisch simuliert. Ein hierfür zu verwendendes Simulationsmodell kann anhand des volumetrischen Modells CAD implementiert oder initialisiert werden.

Im Rahmen der Simulation wird das Bauteil BT anhand der im Verfahrensschritt S4 ermittelten Bewegungsdaten BD virtuell ausgerichtet und in Schwingungen versetzt. Insbesondere wird hierbei eine bewegungsbedingte Verteilung der virtuellen Werkstoffpartikel VWP im Bauteil BT simuliert. Wie oben bereits erwähnt, wird der Ausschüttvorgang durch die Schwerkraft angetrieben und durch die Schwingungen unterstützt. Durch die Schwingungen kann das Werkstoffpulver in vielen Fällen effektiv "fluidisiert" werden oder eine Viskosität eines Werkstofffluids verringert werden, wodurch eine simulationstechnische Behandlung häufig erheblich vereinfacht wird. Vorzugsweise wird die Bewegung der virtuellen Werkstoffpartikel VWP mittels einer Partikelsimulation berechnet. Derartige Partikelsimulationsverfahren können insbesondere auf Grafikprozessoren effizient berechnet werden.

Als Ergebnis der Simulation des spezifischen Bewegungsschritts wird ein hieraus resultierender, simulierter Füllgrad SFG ermittelt. Der simulierte Füllgrad SFG gibt einen gemäß der Simulation nach Ausführung des Bewegungsschritts verbleibenden Füllgrad des Bauteils BT mit virtuellen Werkstoffpartikeln VWP an. Der simulierte Füllgrad SFG wird dem jeweiligen Bewegungsschritt zugeordnet.

Im Verfahrensschritt S6 wird geprüft, ob der Hohlraum H virtuell entleert ist. Hierzu kann ein Zielwert für die Entleerung vorgegeben sein, z.B. ein Restfüllgrad, bei dessen Unterschreitung das Bauteil BT als entleert oder gebrauchsfertig gilt. Sofern der Hohlraum H nicht entleert ist, erfolgt ein Rücksprung zum Verfahrensschritt S4, andernfalls wird der Verfahrensschritt S7 ausgeführt.

Im Verfahrensschritt S7 werden die Simulationsergebnisse dokumentiert und eine darauf basierende Steuerdatei SD generiert. Die generierte Steuerdatei SD wird dem der Simulation vorgegebenen Anfangsfüllgrad zugeordnet.

Die Steuerdatei SD enthält Bewegungsdaten BD zum Ansteuern der Bewegungsvorrichtung BV sowie simulierte Füllgrade SFG. Im vorliegenden Ausführungsbeispiel enthält die Steuerdatei SD zu jedem der simulierten Bewegungsschritte die den jeweiligen Bewegungsschritt spezifizierenden Bewegungsdaten BD sowie den aus diesem Bewegungsschritt resultierenden simulierten Füllgrad SFG. Mit anderen Worten, die Steuerdatei SD enthält für einen K-ten simulierten Bewegungsschritt die diesen spezifizierenden Bewegungsdaten BD(K) sowie den daraus resultierenden simulierten Füllgrad SFG(K). Die Abfolge der simulierten Füllgrade SFG spezifiziert einen bewegungsinduzierten simulierten Füllgradverlauf.

Vorzugsweise können die Ausschüttvorgänge in unterschiedlichen räumlichen Auflösungen, d.h. durch Einteilung des Hohlraums H in unterschiedlich aufgelöste räumliche Bereiche RB simuliert werden.

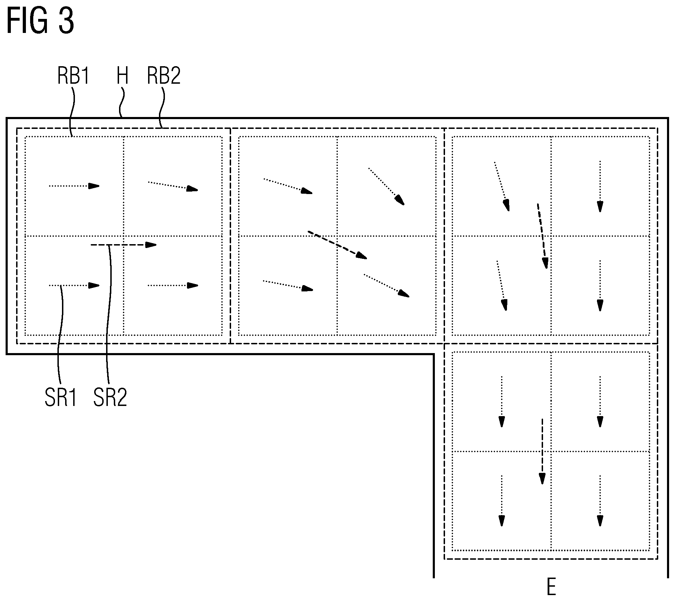

Figur 3 veranschaulicht eine Einteilung des Bauteils BT bzw. dessen Hohlraums H in Bereiche RB1 und RB2 mit unterschiedlicher räumlicher Auflösung. Insofern in Figur 3 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben implementiert oder realisiert sind.

Der Hohlraum H ist in Figur 3 durch eine durchgezogene Linie abgegrenzt, während die ersten räumlichen Bereiche RB1 durch punktierte Linien und die zweiten räumlichen Bereiche RB2 durch strichliierte Linien angedeutet sind. Wie oben bereits beschrieben, können die räumlichen Bereiche RB1 und RB2 jeweils durch ein virtuelles räumliches Gitter, das über das Bauteil BT und damit auch über dessen Hohlraum H gelegt wird, erzeugt werden. Im vorliegenden Ausführungsbeispiel sind die zweiten räumlichen Bereiche RB2 gröber aufgelöst als die ersten räumlichen Bereiche RB1 und werden entsprechend durch ein virtuelles räumliches Gitter mit gröberer Auflösung erzeugt als die ersten räumlichen Bereiche RB1. Aus Übersichtlichkeitsgründen sind in Figur 3 nur ein erster räumlicher Bereich RB1 und ein zweiter räumlicher Bereich RB2 mit einem Bezugszeichen versehen.

Für die ersten räumlichen Bereiche RB1 wird jeweils, wie im Zusammenhang mit Figur 2 beschrieben, eine erste Schüttrichtung SR1 ermittelt, in der sich eine Weglänge vom jeweiligen ersten räumlichen Bereich RB1 zur Öffnung E vorzugsweise maximal verkürzt.

Darüber hinaus wird für einen jeweiligen zweiten räumlichen Bereich RB2 eine diesem zugeordnete, zweite Schüttrichtung SR2 ermittelt. Im vorliegenden Ausführungsbeispiel wird die zweite Schüttrichtung SR2 für einen jeweiligen zweiten räumlichen Bereich RB2 als Mittelwert der ersten Schüttrichtungen SR1, der von dem jeweiligen zweiten räumlichen Bereich RB2 überdeckten ersten räumlichen Bereiche RB1 berechnet. Die ersten Schüttrichtungen SR1 sind in Figur 3 durch punktierte Pfeile angedeutet, während die zweiten Schüttrichtungen SR2 durch strichliierte Pfeile angedeutet sind. Aus Übersichtlichkeitsgründen sind in Figur 3 nur eine erste Schüttrichtung SR1 und eine zweite Schüttrichtung SR2 mit einem Bezugszeichen versehen.

Bei der Simulation von Ausschüttvorgängen werden in den Verfahrensschritten S2 und S4 vorzugsweise die zweiten Schüttrichtungen SR2 als zu simulierende Schüttrichtungen verwendet. Alternativ und zusätzlich kann eine Hierarchie von gröberen virtuellen Gittern verwendet werden, um den Hohlraum H in eine Hierarchie von räumlichen Bereichen mit unterschiedlichen räumlichen Auflösungen einzuteilen. Für die Entleerung des Bauteils BT vorteilhafte Schüttrichtungen können dann, z.B. durch gewichtete Mittelung, aus den für unterschiedliche Auflösungen berechneten Schüttrichtungen abgeleitet werden. Durch die Verwendung von gemittelten Schüttrichtungen kann eine für die Simulation benötigte Rechenzeit in vielen Fällen erheblich reduziert werden. Weiterhin können auf diese Weise Schüttrichtungen erzeugt werden, die für eine größere Anzahl von Werkstoffpartikeln und über ein längeres Zeitintervall hinweg vorteilhafte Transportwege zur Öffnung E ergeben. Auf diese Weise kann die Anzahl von benötigten Entleerungsschritten häufig erheblich verringert werden.

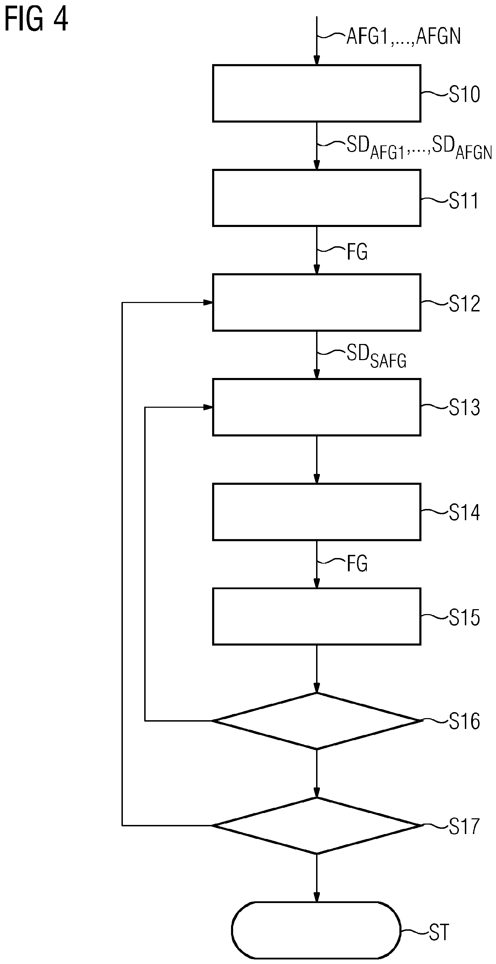

Figur 4 zeigt ein Ablaufdiagramm eines erfindungsgemäßen Verfahrens zum Separieren von überschüssigem Werkstoff WS aus dem Bauteil BT. Insofern in Figur 4 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben implementiert oder realisiert sind. Das erfindungsgemäße Verfahren wird vorzugsweise durch die Steuerung CTL ausgeführt, die zur Ausführung insbesondere über einen oder mehrere Prozessoren, Computer, anwendungsspezifische integrierte Schaltungen (ASIC), digitale Signalprozessoren (DSP) und/oder sogenannte "Field Programmable Gate Arrays" (FPGA) verfügen kann.

In einem initialen Verfahrensschritt S10 wird für unterschiedliche vorgegebene Anfangsfüllgrade AFG1,...,AFGN jeweils ein Ausschüttvorgang, wie im Zusammenhang mit Figur 2 beschrieben, durch die Verfahrensschritte S1 bis S7 simuliert. Die Anfangsfüllgrade AFG1,...,AFGN sind die zu Beginn des jeweils simulierten Ausschüttvorgangs vorliegenden Füllgrade des Bauteils BT mit virtuellen Werkstoffpartikeln VWP. Als Anfangsfüllgrade AFG1,...,AFGN können beispielsweise die Werte 1, 0.8, 0.6, 0.4 und 0.2 vorgegeben sein. Gegebenenfalls kann zusätzlich auch ein Endfüllgrad vorgegeben sein, bei dem die Simulation des betreffenden Ausschüttvorgangs beendet wird.

Als Ergebnis der Simulationen wird jeweils, wie oben beschrieben, eine dem jeweiligen Anfangsfüllgrad AFG1,... bzw. AFGN zugeordnete Steuerdatei SD_{AFG1}, ... bzw. SD_{AFGN} generiert, die jeweils Bewegungsdaten BD und simulierte Füllgrade SFG enthält. Die Generierung der Steuerdateien SD_{AFG1}, ..., SD_{AFGN} kann vorzugsweise vorab oder offline durchgeführt werden.

In einem Verfahrensschritt S11 wird ein realer Füllgrad FG des Bauteils BT mit überschüssigem Werkstoff WS, wie im Zusammenhang mit Figur 1 beschrieben, mittels der Waage W gemessen.

In einem nachfolgenden Verfahrensschritt S12 wird aus den vorgegebenen Anfangsfüllgraden AFG1, ..., AFGN derjenige Anfangsfüllgrad SAFG selektiert, der dem aktuell gemessenen Füllgrad FG am nächsten kommt. Anhand des selektierten Anfangsfüllgrads SAFG wird die zugeordnete Steuerdatei SD_{SAFG} selektiert.

Zu Beginn der Werkstoffseparation kann alternativ zu den Verfahrensschritten S11 und S12 auch ein Anfangsfüllgrad von 1 selektiert werden.

In einem Verfahrensschritt S13 wird das Bauteil BT mittels der Bewegungsvorrichtung BV gemäß den Bewegungsdaten BD aus der selektierten Steuerdatei SD_{SAFG} bewegt, d.h. ausgerichtet und ggf. in Schwingungen versetzt.

In einem Verfahrensschritt S14 wird nach Ausführung dieser Bewegung erneut ein realer Füllgrad FG des Bauteils BT mit überschüssigem Werkstoff WS mittels der Waage W gemessen.

In einem weiteren Verfahrensschritt S15 wird der erneut gemessene Füllgrad FG mit dem aus dem aktuellen Bewegungsschritt resultierenden, simulierten Füllgrad SFG aus der Steuerdatei SD_{SAFG} verglichen. Als Vergleichsergebnis wird eine quantifizierte Abweichung zwischen dem erneut gemessenen Füllgrad FG und dem simulierten Füllgrad SFG ermittelt.

In einem nachfolgenden Verfahrensschritt S16 wird geprüft, ob die ermittelte Abweichung einen vorgegebenen Toleranzwert überschreitet. Der Toleranzwert repräsentiert hierbei eine maximal zulässige Abweichung zwischen Messung und Simulation. Für den Toleranzwert kann vorzugsweise ein Wert von 10%, 5% oder 1% vorgegeben sein. Falls die Prüfung ergibt, dass der Toleranzwert nicht überschritten wird, wird ein Rücksprung zum Verfahrensschritt S13 ausgeführt, um den nächsten Bewegungsschritt aus der Steuerdatei SD_{SAFG} auszuführen. Falls der Toleranzwert dagegen überschritten wird, wird ein Verfahrensschritt S17 ausgeführt.

Im Verfahrensschritt S17 wird anhand des erneut gemessenen Füllgrades FG geprüft, ob das Bauteil BT bereits entleert ist, d.h. ob der erneut gemessene Füllgrad FG unterhalb eines vorgegebenen Zielwertes für die Entleerung des Bauteils BT liegt. Als Zielwert für die Entleerung kann ein Füllgrad vorgegeben sein, bei dessen Unterschreitung das Bauteil als geleert oder als gebrauchsfertig gilt. Falls die Prüfung ergibt, dass das Bauteil BT noch nicht entleert ist, wird ein Rücksprung zum Verfahrensschritt S12 ausgeführt, um einen neuen Anfangsfüllgrad zu selektieren, der dem erneut gemessenen Füllgrad FG am nächsten liegt oder zumindest näher liegt als der bisher selektierte Anfangsfüllgrad. Falls dagegen die Prüfung ergibt, dass das Bauteil BT entleert ist, wird die erfindungsgemäße Separation erfolgreich beendet und gelangt in einen Zielzustand ST.

Das erfindungsgemäße Verfahren erlaubt eine effiziente, simulationsgestützte Separation von überschüssigem Werkstoff von einem additiv hergestellten Bauteil. Dabei erweist sich das Verfahren als sehr robust gegenüber Simulationsfehlern, da bei zu großer Abweichung zwischen real gemessener und simulierter Entleerung zu besser an die realen Messwerte angepassten Simulationsergebnissen gewechselt werden kann.

## Patentansprüche

1. Verfahren zum Separieren überschüssigen Werkstoffs (WS) von einem additiv hergestellten Bauteil (BT), wobei
a) das Bauteil (BT) zum Separieren des Werkstoffs (WS) durch eine anhand von Bewegungsdaten (BD) steuerbare Bewegungsvorrichtung (BV) bewegt wird, und ein Füllgrad (FG) des Bauteils (BT) mit Werkstoff (WS) gemessen wird,
b) für unterschiedliche Anfangsfüllgrade (AFG1,...,AFGN) des Bauteils (BT) mit Werkstoff (WS) jeweils ein Ausschüttvorgang von Werkstoff (WS) aus dem Bauteil (BT) simuliert wird, wobei jeweils Bewegungsdaten (BD), die eine simulierte Bewegung des Bauteils (BT) spezifizieren, sowie ein aus der simulierten Bewegung resultierender, simulierter Füllgradverlauf (SFG) dem jeweiligen Anfangsfüllgrad (AFG1,...,AFGN) zugeordnet werden,
c) abhängig vom gemessenen Füllgrad (FG) ein entsprechender Anfangsfüllgrad (SAFG) selektiert wird,
d) die Bewegungsvorrichtung (BV) anhand von dem selektierten Anfangsfüllgrad (SAFG) zugeordneten Bewegungsdaten angesteuert wird,
e) der Füllgrad (FG) erneut gemessen und mit einem dem selektierten Anfangsfüllgrad (SAFG) zugeordneten simulierten Füllgradverlauf (SFG) verglichen wird, und
f) abhängig vom Vergleichsergebnis die Verfahrensschritte c) und d) erneut ausgeführt werden.

2. Verfahren nach Anspruch 1, **dadurch gekennzeichnet, dass** das Bauteil (BT) durch die Bewegungsvorrichtung (BV) in unterschiedliche räumliche Ausrichtungen rotiert und/oder in mechanische Schwingungen versetzt wird.

3. Verfahren nach einem der vorhergehenden Ansprüche, **dadurch gekennzeichnet, dass**
zum Messen des Füllgrads (FG) aus dem Bauteil (BT) ausgeschütteter Werkstoff (WS) gewogen wird.

4. Verfahren nach einem der vorhergehenden Ansprüche, **dadurch gekennzeichnet,**
**dass** das Vergleichsergebnis eine quantifizierte Abweichung zwischen dem erneut gemessenen Füllgrad (FG) und dem dem selektierten Anfangsfüllgrad (SAFG) zugeordneten simulierten Füllgradverlauf (SFG) umfasst,
**dass** geprüft wird, ob die Abweichung einen vorgegebenen Toleranzwert überschreitet, und
**dass** im Falle einer Überschreitung ein neuer Anfangsfüllgrad selektiert wird, der weniger vom erneut gemessen Füllgrad (FG) abweicht als der bisher selektierte Anfangsfüllgrad (SAFG), und andernfalls der bisher selektierte Anfangsfüllgrad (SAFG) beibehalten wird.

5. Verfahren nach einem der vorhergehenden Ansprüche, **dadurch gekennzeichnet,**
**dass** räumlich aufgelöste Strukturdaten (CAD) des Bauteils (BT) empfangen werden,
**dass** anhand der Strukturdaten (CAD) ein Hohlraum (H) des Bauteils (BT) ermittelt und in erste räumliche Bereiche (RB1) eingeteilt wird, und
**dass** für einen jeweiligen ersten räumlichen Bereich (RB1) eine Weglänge eines im Hohlraum (H) verlaufenden Wegs zu einer Öffnung (E) des Hohlraums (H) und/oder eine erste Schüttrichtung (SR1), in der sich diese Weglänge verkürzt, ermittelt und dem jeweiligen ersten räumlichen Bereich (RB1) zugeordnet wird.

6. Verfahren nach Anspruch 5, **dadurch gekennzeichnet,**
**dass** der Hohlraum (H) in zweite räumliche Bereiche (RB2) mit gröberer räumlicher Auflösung als die ersten räumlichen Bereiche (RB1) eingeteilt wird, und
**dass** für einen jeweiligen zweiten räumlichen Bereich (RB2) eine zweite Schüttrichtung (SR2) aus ersten Schüttrichtungen (SR1) von mit dem jeweiligen zweiten räumlichen Bereich (RB2) überlappenden ersten räumlichen Bereichen (RB1) abgeleitet wird.

7. Verfahren nach Anspruch 5 oder 6, **dadurch gekennzeichnet, dass** eine kürzeste Weglänge eines jeweiligen räumlichen Bereichs (RB, RB1, RB2) zur Öffnung (E) mittels eines Fast-Marching-Verfahrens ermittelt wird.

8. Verfahren nach einem der Ansprüche 5 bis 7, **dadurch gekennzeichnet,**
**dass** im Rahmen der Simulationen jeweils
- der Hohlraum (H) des Bauteils simulativ mit virtuellem Werkstoff (VWP) bis zum jeweiligen Anfangsfüllgrad (AFG1, ..., AFGN) gefüllt wird,
- ein räumlicher Bereich (RB, RB1, RB2) selektiert wird, der eine kürzere Weglänge zur Öffnung (E) aufweist und/oder mit mehr virtuellem Werkstoff (VWP) gefüllt ist als andere räumliche Bereiche (RB, RB11, RB2),
- eine dem selektierten räumlichen Bereich (RB, RB1, RB2) zugeordnete Schüttrichtung (SR1, SR2) ermittelt wird, und
- Bewegungsdaten (BD) ermittelt werden, die eine Ausrichtung des Bauteils (BT) gemäß der ermittelten Schüttrichtung (SR1, SR2) spezifizieren.

9. Verfahren nach einem der vorhergehenden Ansprüche, **dadurch gekennzeichnet,**
**dass** im Rahmen der Simulationen jeweils eine bewegungsbedingte Verteilung von virtuellem Werkstoff (VWP) im Bauteil (BT) simuliert wird.

10. Verfahren nach einem der vorhergehenden Ansprüche, **dadurch gekennzeichnet,**
**dass** für einen jeweiligen Anfangsfüllgrad (AFG1,...,AFGN) die zugeordneten Bewegungsdaten (BD) und der zugeordnete simulierte Füllgradverlauf (SFG) in einer Steuerdatei (SD_{AFG1}, ..., SD_{AFGN}) gespeichert werden, die dem jeweiligen Anfangsfüllgrad (AFG1,...,AFGN) zugeordnet wird.

11. Anordnung (A) zum Separieren eines Werkstoffs (WS) von einem additiv hergestellten Bauteil (BT), eingerichtet zum Ausführen eines Verfahrens nach einem der vorhergehenden Ansprüche.
